# FASCICULE DE BREVET EUROPEEN

(11) **EP 2 052 934 B1**
(45) Date de publication et mention de la délivrance du brevet: **20.04.2016**
(21) Numéro de dépôt: 08166084.7
(22) Date de dépôt: 08.10.2008
(51) Int. Cl.: B60W 20/00, B60K 6/28, B60W 30/18, B60W 10/06, B60W 10/08, B60W 10/26

(54) **Procédé de gestion du fonctionnement du système de traction d'un véhicule hybride**
Steuerungsverfahren zum Betreiben des Antriebssystems eines Hybridfahrzeugs
Method for controlling the drive train operation of a hybrid vehicle

(30) Priorité: 26.10.2007 FR 0758588
(43) Date de publication de la demande: 29.04.2009
(73) Titulaire: Peugeot Citroën Automobiles Société Anonyme, 78140 Vélizy Villacoublay (FR)
(72) Inventeur: Beddok, Stéphane, 92160 Antony (FR)
(74) Mandataire: Ménès, Catherine

(56) Documents cités:
- WO-A-2007/025319
- DE-A1- 19 814 402
- US-B1- 7 252 165

## Description

La présente invention concerne un procédé de gestion du fonctionnement du système de traction d'un véhicule hybride, dans le but de réduire la consommation de carburant.

La traction des véhicules hybrides est assurée en alternance par un moteur thermique et par un moteur électrique. Des dispositifs appropriés permettent de récupérer de l'énergie, par exemple l'énergie de décélération du véhicule, et de stocker l'énergie récupérée dans une unité de stockage d'énergie, constituée par exemple par un ou plusieurs super-condensateurs ou une ou plusieurs batterie. L'énergie stockée peut être utilisée de diverses façons exposées ci-après. La présente invention propose une stratégie permettant d'optimiser la consommation en carburant du véhicule.

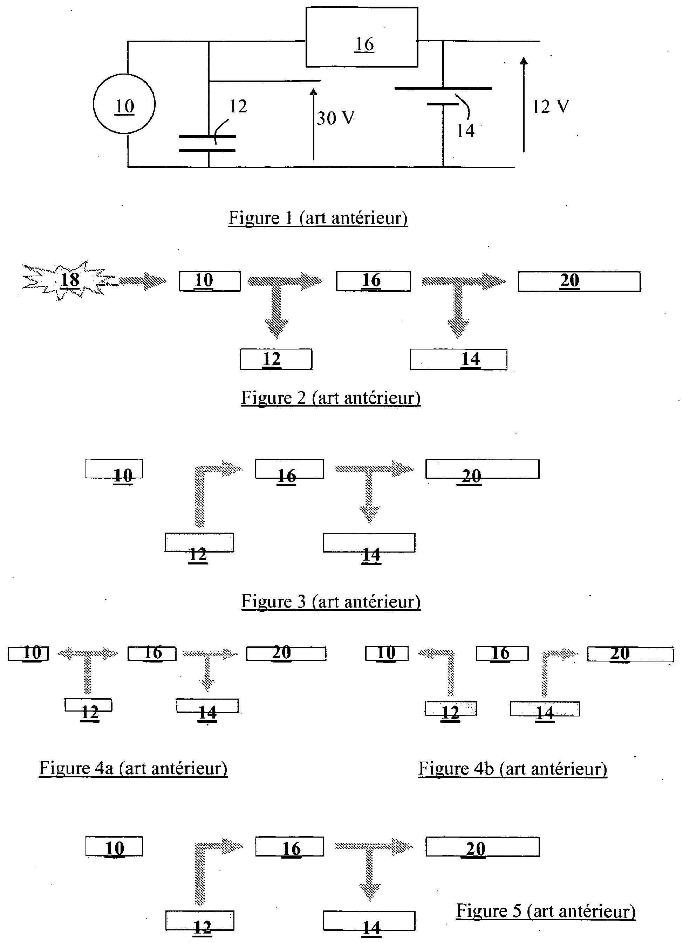

La figure 1 représente la partie électrique de l'architecture d'un système de traction d'un véhicule hybride. Une machine électrique 10 peut être couplée ou désaccouplée au vilebrequin du moteur thermique (non représenté) du véhicule. La machine électrique 10, de préférence un alternateur réversible, peut fournir du courant électrique à une unité de stockage d'énergie électrique 12 et à une ou plusieurs batteries 14 (afin de ne pas alourdir l'exposé, une seule batterie sera mentionnée par la suite). L'unité de stockage est de préférence composée d'une ou plusieurs supercapacités. La tension électrique aux bornes de l'unité 12 est voisine de 30 Volts, donc différente de la tension aux bornes de la batterie 14, généralement voisine de 12 Volts. Un convertisseur DC/DC 16 relie l'unité de stockage 12 à la batterie14 permettant ainsi un échange d'énergie électrique entre l'unité de stockage 12 et la batterie 14 malgré la différence de tension. Des auxiliaires électriques (par exemple les phares ou les essuie-glaces) sont alimentés, soit par l'unité de stockage 12 sous une tension voisine de 30 Volts, soit par la batterie 14 sous une tension voisine de 12 Volts. L'alternateur réversible 10 peut fonctionner comme un alternateur classique (son rotor étant couplé au vilebrequin du moteur) fournissant du courant électrique, soit comme un moteur fournissant de l'énergie mécanique lorsqu'il est alimenté en courant électrique (son rotor entraînant alors la rotation du vilebrequin).

L'architecture représentée sur la figure 1 permet de réaliser la fonction Stop & Start (STT) selon laquelle le moteur thermique est automatiquement arrêté (par exemple à l'arrêt à un feu rouge) et automatiquement redémarré, si certaines conditions sont réunies. Cette architecture permet aussi de récupérer de l'énergie pendant les périodes de décélération du véhicule. Ainsi lorsque le conducteur lève le pied de la pédale d'accélérateur ou lorsqu'il freine, la machine électrique 10 peut prélever du couple au vilebrequin, freinant ainsi le véhicule pour générer un courant électrique qui servira à alimenter les auxiliaires électriques du véhicule. Le surplus d'énergie électrique sera stocké dans l'unité de stockage 12.

Les figures 2 à 6 incluses illustrent divers fonctionnement du système de traction d'un véhicule hybride, les flux d'énergie étant indiqués par des flèches. Sur ces figures et sur la figure 1, les mêmes éléments sont désignés par les mêmes numéros de référence.

Sur la figure 2 qui illustre un mode de fonctionnement en récupération d'énergie en phase de décélération, la référence 18 illustre une décélération du véhicule. La machine électrique 10 couplée au vilebrequin du moteur thermique prélève du couple mécanique au vilebrequin, freinant ainsi le véhicule (l'embrayage étant bien entendu fermé et le moteur thermique toujours relié aux roues), ce qui génère un courant électrique utilisé, à travers le convertisseur DC/DC 16, pour alimenter les auxiliaires électriques du réseau électrique de bord 20. Le surplus d'énergie électrique fournie par la machine 10 est stocké dans l'unité de stockage 12 et éventuellement dans la batterie 14 lorsqu'elle est déchargée.

La figure 3 illustre un mode de fonctionnement selon lequel 'énergie stockée dans l'unité de stockage 12 est dépensée de manière prioritaire pour alimenter les auxiliaires électriques du réseau électrique de bord 20, sous 12 et 30 Volts, pendant l'arrêt du véhicule, le moteur thermique étant arrêté, et pour redémarrer le moteur thermique.

Le redémarrage du moteur thermique grâce à l'énergie stockée dans l'unité 12 est illustré à l'aide des figures 4. Sur les figures 4a et 4b, de l'énergie emmagasinée dans l'unité de stockage 12 est fournie à la machine électrique 10 couplée au vilebrequin du moteur thermique afin de redémarrer le moteur thermique. Sur la figure 4a, le réseau de bord 20 est alimenté par l'unité de stockage 12, alors que sur la figure 4b, le réseau de bord est alimenté par la batterie 14. Les modes de fonctionnement représentés sur les figures 3 et 4 permettent de réaliser des économies de carburant.

La figure 5 illustre un mode de fonctionnement, appelé délestage alternateur, selon lequel la machine électrique 10 est mise à l'arrêt et donc ne fournit pas de courant électrique, le rotor de la machine électrique 10 étant découplé du vilebrequin du moteur thermique. L'énergie restante dans l'unité de stockage 12 (après l'utilisation prévue ci-dessus en regard des figures 3 et 4) peut être utilisée pour alimenter les auxiliaires électriques du réseau de bord 20, lorsque le véhicule roule, à la place de l'énergie qu'aurait fourni la machine électrique 10 si elle avait continué à fonctionner pour produire du courant. La machine électrique 10 ne prélevant plus aucun couple mécanique au vilebrequin, une économie d'énergie, et donc une économie de consommation de carburant, est obtenue.

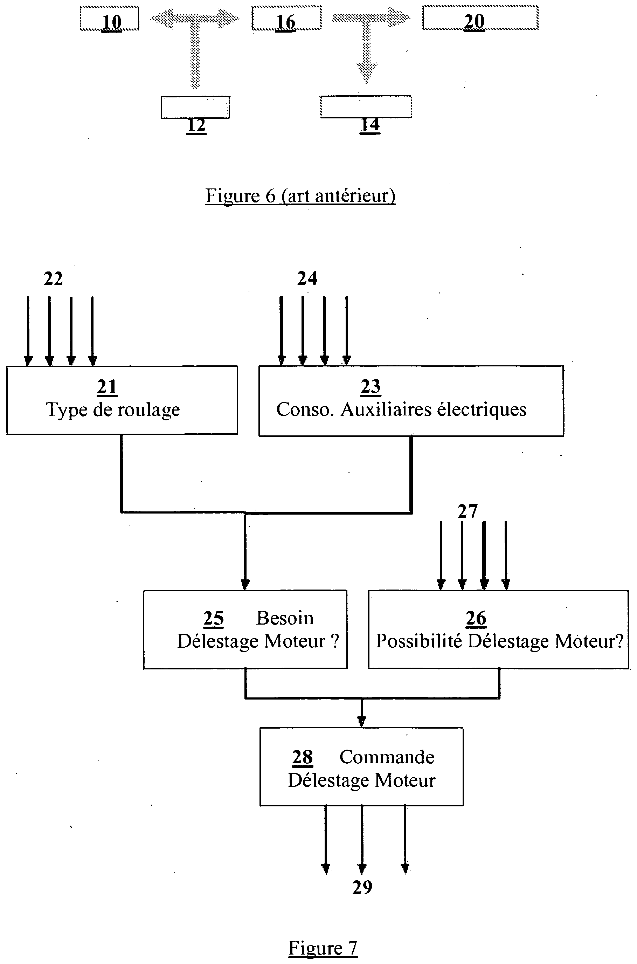

Une autre alternative pour dépenser l'énergie stockée est de la réinjecter au vilebrequin du moteur thermique (figure 6). Selon ce fonctionnement, appelé délestage moteur, l'unité de stockage 12 fournit de l'énergie électrique à la machine électrique 10, laquelle transforme cette énergie électrique en énergie mécanique, sous forme d'un couple moteur fourni au vilebrequin. Le moteur thermique réduit alors son propre couple pour compenser le couple fourni par la machine électrique, ce qui entraîne une réduction de la consommation de carburant.

On peut remarquer que lorsque la consommation de carburant n'est pas un souci, il est possible de ne pas diminuer le couple fourni par le moteur thermique, le couple délivré par la machine électrique 10 venant alors s'ajouter au couple du moteur thermique afin d'améliorer les performances du véhicule.

Certains documents décrivent les divers fonctionnements décrits plus haut, mais sans proposer de solutions pour diminuer la consommation de carburant. Ainsi, la demande de brevet US 2005/0061561 A1 décrit une architecture d'un véhicule hybride, dont le but est d'assurer un bon fonctionnement du système électrique en contrôlant la distribution de l'énergie électrique dans le système. Cette demande de brevet ne s'intéresse qu'au système de traction électrique, en se désintéressant de la combinaison moteur thermique / moteur électrique (par exemple, comment soulager le moteur thermique pour diminuer la consommation de carburant).

La présente invention a pour but d'optimiser la consommation en carburant du véhicule en permettant de déterminer, lorsque le véhicule roule, le mode de fonctionnement le plus approprié, et plus spécialement de déterminer quand il y a lieu d'utiliser le mode de délestage du moteur et le mode de délestage de l'alternateur.

De façon plus précise, l'invention concerne la gestion d'un véhicule hybride (ou plus exactement de son système de traction) pendant le roulage du véhicule, ce véhicule. Le système de traction comporte des auxiliaires électriques, un moteur thermique, une machine électrique pouvant être solidarisée ou désolidarisée du vilebrequin du moteur thermique, une unité de stockage d'énergie électrique pouvant être connectée à la machine électrique, une batterie pouvant être connectée à la machine électrique, aux auxiliaires électriques et à l'unité de stockage notamment par l'intermédiaire d'un convertisseur DC/DC.

Le système peut fonctionner selon plusieurs modes parmi lesquels un mode de délestage du moteur selon lequel la machine électrique est alimentée en énergie par l'unité de stockage afin de fournir de l'énergie mécanique au moteur thermique et un mode de délestage de la machine électrique selon lequel la machine électrique est désolidarisée du vilebrequin. Selon l'invention, afin de déterminer un mode de fonctionnement permettant d'économiser du carburant, on détermine les besoins en énergie électrique des auxiliaires électriques et l'état de charge de l'unité de stockage et, si cet état de charge est au moins égal auxdits besoins, le système passe en mode de délestage de la machine électrique.

Le système de traction ayant fonctionné en mode de délestage de la machine électrique, si l'état de charge de l'unité de stockage est supérieur aux besoins des auxiliaires électriques, le moteur thermique peut être remis en marche à l'aide de la machine électrique alimentée en courant électrique par l'unité de stockage.

Le mode de délestage du moteur thermique peut être activé en fonction du niveau de consommation des auxiliaires électriques, du besoin et de la possibilité de faire du délestage du moteur thermique.

Le besoin de faire du délestage moteur peut être déterminé en fonction du type de roulage du véhicule lequel est de préférence déterminé sur une période assez longue, laquelle peut être comprise entre 5 et 10 minutes.

Le type de roulage peut être déterminé en fonction d'au moins l'un des paramètres suivants: la vitesse moyenne du véhicule, la position de la pédale d'accélérateur et le nombre de coups de frein.

La possibilité de faire du délestage est déterminée en fonction de la valeur instantanée de paramètres, tels que la vitesse instantanée du véhicule, la position de la pédale d'accélérateur, le régime moteur et la tension aux bornes de l'unité de stockage.

De préférence, la machine électrique est un alternateur réversible et l'unité de stockage est constituée par au moins une supercapacité ou par au moins une batterie.

D'autres avantages et caractéristiques de l'invention apparaîtront au cours de la description qui suit d'un mode de mise en oeuvre de l'invention, donné à titre d'exemple non limitatif, en référence aux dessins annexés et sur lesquels :
- la figure 1 représente schématiquement l'architecture électrique (connue) du système de traction d'un véhicule hybride ;
- les figures 2 à 6 illustrent divers fonctionnements possibles (et connus) du système de traction du véhicule hybride ; et
- la figure 7 illustre le procédé selon l'invention.

On notera tout d'abord que le mode de fonctionnement en délestage de la machine électrique est plus rentable, en termes de bilan énergétique, que le mode de fonctionnement en délestage du moteur thermique. En effet, en délestage de la machine électrique, l'énergie stockée dans l'unité de stockage est directement utilisée, sous forme électrique, alors que dans le délestage du moteur thermique, l'énergie stockée sous forme électrique est convertie en énergie mécanique par la machine électrique avec un rendement qui, bien entendu, n'est pas de 100%. On cherchera donc à privilégier, chaque fois que ce sera possible, le mode de fonctionnement en délestage de la machine électrique.

Pour cela, on détermine les besoins en énergie électrique des auxiliaires électriques et l'état de charge de l'unité de stockage et, si cet état de charge est au moins égal aux besoins des auxiliaires, le mode de délestage de la machine électrique est utilisé. De plus, si l'état de charge de l'unité de stockage est supérieur aux besoins des auxiliaires électriques, le moteur thermique peut être remis en marche à l'aide de la machine électrique alimentée en courant électrique par l'unité de stockage.

Cependant, le délestage de la machine électrique ne suffit par toujours pour dépenser l'énergie stockée dans l'unité de stockage. Afin de ne pas perdre cette énergie stockée, non dépensée par le délestage de la machine électrique, il est intéressant de l'utiliser aussi pour le délestage du moteur thermique. Cette situation de « surplus » d'énergie stockée peut se produire par exemple lorsque :
- les phases de stockage d'énergie dans l'unité de stockage sont fréquentes, rapprochées temporellement (si la conduite du véhicule est « hachée » par exemple) ;
- les phases de stockage d'énergie sont nombreuses et longues comparées aux phases de délestage de la machine électrique ;
- la consommation des auxiliaires électriques du réseau de bord est trop faible pour dépenser complètement l'énergie stockée dans l'unité de stockage en phase de délestage de la machine électrique.

Dans ces cas, si les conditions de conduite le permettent, on peut utiliser le mode de délestage du moteur thermique.

Le procédé de sélection du mode de délestage du moteur thermique, permettant de réaliser un gain en consommation de carburant, alors que le véhicule roule, est illustré sur la figure 7. Ce procédé est mis en oeuvre par un calculateur ou microprocesseur programmé qui peut être le calculateur central du véhicule ou un calculateur spécialement dédié. Des capteurs permettent de mesurer ou de détecter les conditions de roulage ou de consommation des auxiliaires électriques.

On se pose tout d'abord la question de savoir si l'on veut faire du délestage moteur et pour cela, le type de roulage dans lequel se trouve le véhicule est déterminé ou estimé (référence 21). Le type de roulage est déterminé : par exemple, la vitesse du véhicule est-elle stabilisée ou non ou la circulation est-elle en ville ou la circulation est-elle fluide ou qu'elle est la dynamique de conduite...L'estimation du type de roulage s'effectue à l'aide des valeurs « moyennes » d'informations 22 relatives au véhicule, valeurs moyennes mesurées ou déterminées sur une période assez longue, par exemple sur les cinq ou dix dernières minutes de roulage. Ces informations peuvent être par exemple la vitesse moyenne, l'accélération du véhicule, l'appuie ou non sur la pédale d'accélérateur et le freinage du véhicule (par exemple, nombre d'appuis sur la pédale de frein durant les cinq ou dix dernière minutes). On détermine également (référence 23) le niveau de consommation des auxiliaires électriques, par mesure ou par estimation par exemple du courant électrique et/ou de la puissance et/ou de la tension du réseau de bord 24. C'est à partir d'une cartographie des valeurs de ces informations obtenues pendant la période considérée que le calculateur déterminera le besoin de passer ou non en phase de délestage du moteur thermique (25). En parallèle, on détermine (26) si le système peut, ou non, passer en mode de délestage du moteur. Cette détermination est effectuée à partir d'une cartographie des valeurs de données instantanées telles que la vitesse instantanée du véhicule, la position de la pédale d'accélérateur, le régime du moteur thermique et la tension aux bornes de l'unité de stockage d'énergie électrique. Si le calculateur détermine à partir des cartographies des valeurs moyennes et des valeurs instantanées, d'une part, s'il est possible de faire du délestage du moteur thermique (26) (en d'autres termes, veut-on faire ce délestage ?) et, d'autre part, le besoin de faire du délestage du moteur (25) (en d'autres termes, peut-on faire ce délestage ?), alors le système commande (28) ou non le passage en mode de délestage du moteur thermique. Cette commande est éventuellement passée (29) au calculateur du moteur thermique et au calculateur de la machine électrique. On notera que ces calculateurs peuvent n'être qu'un seul et même calculateur.

D'autres modes de mise en oeuvre que celui décrit et représenté peuvent être conçus par l'homme du métier sans sortir du cadre de la présente invention. Par exemple, l'unité de stockage peut être constituée d'un ensemble de batteries à la place d'une ou plusieurs supercapacités.

## Revendications

1. Procédé de gestion d'un véhicule hybride qui comprend des auxiliaires électriques (20), un moteur thermique, une machine électrique (10) pouvant être solidarisée ou désolidarisée du vilebrequin du moteur, une unité de stockage d'énergie électrique (12) pouvant être connectée à la machine électrique, une batterie (14) pouvant être connectée à la machine électrique, aux auxiliaires électriques et à l'unité de stockage, le système pouvant fonctionner lors du roulage du véhicule au moins selon un mode de délestage du moteur, le couple vilebrequin requis résultant du couple réduit appliqué par le moteur et du couple appliqué par la machine électrique alimentée par l'unité de stockage, et un mode de délestage de la machine électrique alors désolidarisée du vilebrequin, le couple vilebrequin requis résultant du couple appliqué par le seul moteur, le procédé étant **caractérisé par** la détermination des besoins en énergie électrique des auxiliaires électriques et de l'état de charge de l'unité de stockage et, si cet état de charge est au moins égal auxdits besoins, le passage en mode de délestage de la machine électrique.

2. Procédé selon la revendication 1, **caractérisé en ce que**, le système de traction ayant fonctionné en mode de délestage de la machine électrique, si l'état de charge de l'unité de stockage est supérieur aux besoins des auxiliaires électriques, le moteur thermique est remis en marche à l'aide de la machine électrique alimentée en courant électrique par l'unité de stockage.

3. Procédé selon l'une des revendications précédentes **caractérisé en ce que** le mode de délestage du moteur thermique est activé (28) en fonction du niveau de consommation des auxiliaires électriques (23), du besoin (25) et de la possibilité (26) de faire du délestage du moteur thermique.

4. Procédé selon la revendication 3 **caractérisé en ce que** le besoin (25) de faire du délestage moteur est déterminé en fonction du type de roulage du véhicule (21).

5. Procédé selon la revendication 4 **caractérisé en ce que** le type de roulage (21) est déterminé sur une période assez longue.

6. Procédé selon la revendication 5 **caractérisé en ce que** ladite période assez longue est comprise entre 5 et 10 minutes.

7. Procédé selon l'une des revendications 4 à 6 **caractérisé en ce que** le type de roulage (21) est déterminé en fonction d'au moins l'un des paramètres suivants (22) : la vitesse moyenne du véhicule, la position de la pédale d'accélérateur et le nombre de coups de frein.

8. Procédé selon l'une des revendications 3 à 7 **caractérisé en ce que** la possibilité (26) de faire du délestage est déterminée en fonction de la valeur instantanée de paramètres.

9. Procédé selon la revendication 8 **caractérisé en ce que** lesdits paramètres (27) sont choisis parmi la vitesse instantanée du véhicule, la position de la pédale d'accélérateur, le régime moteur et la tension aux bornes de l'unité de stockage.

10. Procédé selon l'une des revendications précédentes **caractérisé en ce que** la machine électrique (10) est un alternateur réversible.

11. Procédé selon l'une des revendications précédentes **caractérisé en ce que** l'unité de stockage (12) est constituée par au moins une supercapacité.

12. Procédé selon l'une des revendications 1 à 10 **caractérisé en ce que** l'unité de stockage (12) est constituée par au moins une batterie.

## Patentansprüche

1. Steuerungsverfahren eines Hybridfahrzeugs, das elektrische Hilfsmittel (20), eine Brennkraftmaschine, einen Elektromotor (10), der fest mit der Kurbelwelle des Motors verbunden oder von ihr getrennt werden kann, eine Einheit zum Speichern elektrischer Energie (12), die mit dem Elektromotor verbunden werden kann, eine Batterie (14), die mit dem Elektromotor, mit den elektrischen Hilfsmitteln und mit der Speichereinheit verbunden werden kann, umfasst, wobei das System beim Fahren des Fahrzeugs mindestens gemäß einem Entlastungsmodus der Brennkraftmaschine funktionieren kann, wobei das Kurbelwellendrehmoment, das erforderlich ist, aus dem reduzierten Drehmoment resultiert, das von der Brennkraftmaschine angelegt wird, und aus dem Drehmoment, das von dem Elektromotor, der von der Speichereinheit versorgt wird, angelegt wird, und gemäß einem Entlastungsmodus des Elektromotors, während er von der Kurbelwelle getrennt ist, wobei das erforderliche Kurbelwellendrehmoment aus dem Drehmoment resultiert, das von der Brennkraftmaschine allein angelegt wird, Verfahren **gekennzeichnet durch** das Bestimmen des Bedarfs an elektrischer Energie der elektrischen Hilfsmittel und des Ladezustands der Speichereinheit, und, falls dieser Ladezustand mindestens gleich dem Bedarf ist, Übergang des Elektromotors auf Entlastungsmodus.

2. Verfahren nach Anspruch 1, **dadurch gekennzeichnet, dass** das Traktionssystem, das im Entlastungsmodus des Elektromotors funktioniert hat, falls der Ladezustand der Speichereinheit höher ist als der Bedarf der elektrischen Hilfsmittel, die Brennkraftmaschine mit Hilfe des Elektromotors, der von der Speichereinheit mit elektrischem Strom versorgt wird, wieder in Betrieb gesetzt wird.

3. Verfahren nach einem der vorhergehenden Ansprüche, **dadurch gekennzeichnet, dass** der Entlastungsmodus der Brennkraftmaschine in Abhängigkeit von dem Verbrauchspegel der elektrischen Hilfsmittel (23), dem Bedarf (25) und der Möglichkeit (26), Entlasten der Brennkraftmaschine auszuführen, aktiviert wird (28).

4. Verfahren nach Anspruch 3, **dadurch gekennzeichnet, dass** der Bedarf (25), Entlasten des Verbrennungsmotors auszuführen, in Abhängigkeit von dem Typ des Fahrens des Fahrzeugs (21) bestimmt wird.

5. Verfahren nach Anspruch 4, **dadurch gekennzeichnet, dass** der Typ des Fahrens (21) über eine relativ lange Periode bestimmt wird.

6. Verfahren nach Anspruch 5, **dadurch gekennzeichnet, dass** die relativ lange Periode zwischen 5 und 10 Minuten liegt.

7. Verfahren nach einem der Ansprüche 4 bis 6, **dadurch gekennzeichnet, dass** der Typ des Fahrens (21) in Abhängigkeit von mindestens einem der folgenden Parameter (22) bestimmt wird: die mittlere Geschwindigkeit des Fahrzeugs, die Position des Gaspedals und die Anzahl der Bremsbetätigungen.

8. Verfahren nach einem der Ansprüche 3 bis 7, **dadurch gekennzeichnet, dass** die Möglichkeit (26), Entlasten auszuführen, in Abhängigkeit von dem Momentanwert von Parametern bestimmt wird.

9. Verfahren nach Anspruch 8, **dadurch gekennzeichnet, dass** die Parameter (27) aus der Momentangeschwindigkeit des Fahrzeugs, der Position des Gaspedals, der Motordrehzahl und der Spannung an den Klemmen der Speichereinheit ausgewählt sind.

10. Verfahren nach einem der vorhergehenden Ansprüche, **dadurch gekennzeichnet, dass** der Elektromotor (10) ein umkehrbarer Wechselstromgenerator ist.

11. Verfahren nach einem der vorhergehenden Ansprüche, **dadurch gekennzeichnet, dass** die Speichereinheit (12) aus mindestens einem Superkondensator besteht.

12. Verfahren nach einem der Ansprüche 1 bis 10, **dadurch gekennzeichnet, dass** die Speichereinheit (12) aus mindestens einer Batterie besteht.

## Claims

1. A method for controlling a hybrid vehicle which includes electrical auxiliaries (20), a heat engine, an electric machine (10) able to be coupled to or uncoupled from the crankshaft of the engine, an electrical energy storage unit (12) being able to be connected to the electric machine, a battery (14) being able to be connected to the electric machine, to the electrical auxiliaries and to the storage unit, the system being able to function during the running of the vehicle at least according to a derating mode of the engine, the required crankshaft torque resulting from the reduced torque applied by the engine and the torque applied by the electric machine supplied by the storage unit, and a derating mode of the electric machine then uncoupled from the crankshaft, the required crankshaft torque resulting from the torque applied by the engine alone, the method being **characterized by** the determining of the electrical energy requirements of the electrical auxiliaries and of the charge state of the storage unit and, if this charge state is at least equal to said requirements, the passage into derating mode of the electric machine.

2. The method according to Claim 1, **characterized in that**, the traction system having functioned in derating mode of the electric machine, if the charge state of the storage unit is greater than the requirements of the electrical auxiliaries, the heat engine is restarted by means of the electric machine supplied with electric current by the storage unit.

3. The method according to one of the preceding claims, **characterized in that** the derating mode of the heat engine is activated (28) as a function of the level of consumption of the electrical auxiliaries (23), of the requirement (25) and of the possibility (26) of carrying out the derating of the heat engine.

4. The method according to Claim 3, **characterized in that** the requirement (25) for carrying out the engine derating is determined as a function of the type of running of the vehicle (21).

5. The method according to Claim 4, **characterized in that** the type of running (21) is determined over a long enough period.

6. The method according to Claim 5, **characterized in that** said long enough period is comprised between 5 and 10 minutes.

7. The method according to one of Claims 4 to 6, **characterized in that** the running type (21) is determined as a function of at least one of the following parameters (22): the average speed of the vehicle, the position of the accelerator pedal and the number of brake applications.

8. The method according to one of Claims 3 to 7, **characterized in that** the possibility (26) of carrying out the derating is determined as a function of the actual value of parameters.

9. The method according to Claim 8, **characterized in that** said parameters (27) are selected from the actual speed of the vehicle, the position of the accelerator pedal, the engine speed and the voltage at the terminals of the storage unit.

10. The method according to one of the preceding claims, **characterized in that** the electric machine (10) is a reversible alternator.

11. The method according to one of the preceding claims, **characterized in that** the storage unit (12) is constituted by at least one supercapacitor.

12. The method according to one of Claims 1 to 10, **characterized in that** the storage unit (12) is constituted by at least one battery.
